# EUROPEAN PATENT APPLICATION

(11) **EP 4 400 609 A1**
(43) Date of publication of application: **17.07.2024**
(21) Application number: 22887233.9
(22) Date of filing: 31.10.2022
(51) Int. Cl.: C21D 8/12, C22C 38/00, C22C 38/60, H01F 1/147

(54) **METHOD OF MANUFACTURING GRAIN-ORIENTED MAGNETIC STEEL SHEET, AND GRAIN-ORIENTED MAGNETIC STEEL SHEET**

(30) Priority: 29.10.2021 JP 2021178346
(71) Applicant: JFE Steel Corporation, Tokyo 100-0011 (JP)
(72) Inventor: TAKAJO, Shigehiro, Tokyo 100-0011 (JP); HOSOYA, Ryota, Tokyo 100-0011 (JP); YAMAGUCHI, Hiroi, Tokyo 100-0011 (JP)
(74) Representative: Grünecker Patent- und Rechtsanwälte PartG mbB
(86) International application number: PCT/JP2022/040839
(87) International publication number: WO 2023/074908

(57) **Abstract**

This disclosure discloses a method for manufacturing a grain-oriented electrical steel sheet and a grain-oriented electrical steel sheet manufactured by the method. The method comprises heating a slab having a predetermined composition by induction heating in a frequency range of 20 to 1000 Hz under predetermined conditions, where the average current flowing in the coil is monotonically decreased as time passes during slab heating; subjecting the slab to finish rolling performed with the rolling finish temperature set to 950 °C or lower at one or both of the leading or trailing end; soaking the hot-rolled sheet at 750 °C or higher for 5 to 90 seconds to obtain a hot band annealed sheet; then cold rolling the annealed sheet once, or twice or more with intermediate annealing performed therebetween to obtain a cold-rolled sheet having a final sheet thickness; and subjecting the cold-rolled sheet to primary and secondary recrystallization annealings.

## Description

### TECHNICAL FIELD

This disclosure relates to a method for manufacturing a grain-oriented electrical steel sheet and a grain-oriented electrical steel sheet manufactured by the method.

### BACKGROUND

Grain-oriented electrical steel sheets are mainly used as iron core materials in transformers, and their lower iron loss is required to improve the energy usage efficiency of transformers.

Methods for reducing the iron loss of a grain-oriented electrical steel sheet include increasing the specific resistance of the steel sheet itself, increasing the tension of the coating, and making the steel sheet thinner, as well as surface processing of the steel sheet and sharpening the crystal orientation of crystal grains to the (110)[001] orientation (hereinafter referred to as Goss orientation).

As indices of magnetic properties, the iron loss W_{17/50} per kg of the steel sheet when it is magnetized to 1.7 T in an alternating magnetic field with an excitation frequency of 50 Hz, and especially magnetic flux density B₈ at magnetic field strength: 800 A/m, which is an indicator of sharpening of crystal orientation toward the Goss orientation, are mainly used.

In order to sharpen the crystal orientation toward the Goss orientation, that is, to increase the degree to which grains are accorded with the Goss orientation, it is important to induce differences of grain boundary mobility so that only sharply Goss-oriented grains grow preferentially, i.e., to make the texture of a primary recrystallized sheet into a specified structure, and to use precipitates called "inhibitor" to suppress the growth of recrystallized grains other than the Goss-oriented grains.

As a technique of using such an inhibitor, for example, JPS40-15644B (PTL1) discloses a method of using AlN and MnS, JPS51-13469B (PTL2) discloses a method of using MnS and MnSe, and both methods have been put into practical use.

These inhibitors are preferably dispersed uniformly and finely in the steel. Therefore, to utilize the inhibitor, it is common practice to heat the slab to 1300 °C or higher before hot rolling to solubilize the inhibitor components and precipitate them finely in a subsequent process.

For example, in the method disclosed in JPS46-23820B (PTL 3), Al is added to the steel, and after hot rolling, hot band annealing at 750 °C to 1200 °C and then rapid cooling are performed to precipitate fine AlN to obtain an extremely high magnetic flux density.

Induction heating is also useful for high-temperature heating of slab, and several techniques have been disclosed.

For example, JP4389553B (PTL 4) discloses that induction heating can be used to raise the temperature of a slab for grain-oriented electrical steel sheet to the temperature range from 1150 °C to 1250 °C in order to shorten the in-furnace time and reduce material property variation.

JP3527309B (PTL 5) discloses a technique for minimizing the desorption of Bi elements by adjusting the soaking time according to soaking temperature.

JPH07-26156A (PTL 6) discloses that when heating a slab at a high temperature from 1400 °C to 1470 °C, the frequency of induction heating can be set to 30 Hz to 300 Hz to enhance heat releasing from the slab surface and to suppress the formation of surface defects such as surface grain boundary oxidation.

Here, high-temperature heating of the slab has the role of solubilizing the inhibitor necessary for evolution of secondary recrystallization of the grain-oriented electrical steel sheet, and in this respect, a higher heating temperature is more preferable.

### CITATION LIST

### Patent Literature

PTL 1: JPS40-15644B
PTL 2: JPS51-13469B
PTL 3: JPS46-23820B
PTL 4: JP4389553B
PTL 5: JP3527309B
PTL 6: JPH07-26156A

### SUMMARY

### (Technical Problem)

However, when the heating temperature is high, abnormal grain growth occurs in the crystal grains of the slab, which tends to promote the formation of coarse structure. This coarse structure is not sufficiently refined in the subsequent hot-rolling and cold-rolling annealing processes and could lead to secondary recrystallization defects.

We investigated a method of manufacturing a grain-oriented electrical steel sheet with excellent magnetic properties that retains the high inhibiting capability of inhibitor even when the heating temperature of the slab is lowered than ever before.

First, reduction of Mn, S, Al, and N, which are inhibitor constituent elements, was examined by comparing conventional component amounts disclosed in, for example, PTL 6, but the inhibiting capability was reduced and only inferior magnetic properties after secondary recrystallization were obtained due to the reduced amounts of precipitated inhibitors. Therefore, we searched for elements that do not form precipitates and are effective in increasing the inhibiting capability in solid solution state, and came up with the idea of utilizing group 15 elements, including grain boundary segregation elements such as P and Sb. For example, the effect of adding Sb is disclosed in JPH02-115319A.

As a result, we found that by setting the composition of the slab in the range described below, even if the heating temperature of the slab is lowered than ever before, the inhibitor is solubilized, and a high inhibiting capability of inhibitor can be achieved in the subsequent process.

However, when a grain-oriented electrical steel sheet was fabricated with such a chemical composition, a problem became apparent that sheet fracture occurred at a high frequency during flattening annealing of the steel sheet after secondary recrystallization. Detailed observation of the steel sheet passing through the flattening annealing line revealed that cracks running in the width direction from several millimeters to several centimeters were formed at the edge of the steel sheet in the width direction. We then found that the sheet fracture is easily caused by these cracks as initiation point.

Furthermore, we found that the cracks formed on the edge of the steel sheet in the width direction are already present at the time of hot-rolled sheet and also tend to be formed increasingly after cold rolling. It is thought that group 15 elements contained in the steel sheet, as known for P, may promote embrittlement of the steel when they dissolve in the iron, thereby causing a rough edge during rolling. JPH06-63031B, for example, discloses a case in which rough edges became noticeable due to segregation elements.

Here, the technique for suppressing a rough edge is disclosed in JP2000-073120A.

However, this technique for suppressing a rough edge involves optimizing the final annealing conditions, and does not actively utilize group 15 elements such as P and Sb.

In detail, it is difficult to completely suppress a rough edge in the steel in which group 15 elements such as P and Sb are actively utilized.

Although there are various theories on the mechanism by which the rough edge occurs, one estimate is presented in JP2002-105537A. That is as follows: "edge crack occurs when tensile tension in the longitudinal direction (rolling direction) is applied to the sheet edge during hot rolling, and it is thought that precipitates and crystal grain boundaries are the initiation point for crack. By the way, when a slab is heated to a high temperature close to the melting point, if the heating rate is fast, the temperature becomes high without sufficiently dissolving inclusions and precipitates into the matrix phase. As a result, the areas where the inclusions and precipitates exist and their surroundings will locally differ in composition from the matrix phase, and therefore have different melting points. At this time, a lower melting point would result in local liquefaction. This rapid rise in temperature to a high temperature causes localized liquefaction, which becomes the initiation point for edge crack, making it easier for edge crack to occur.

It could thus be helpful to provide a method for manufacturing a grain-oriented electrical steel sheet with excellent manufacturability in which elements that are effective in increasing the grain growth inhibiting capability in a solid solution state are actively utilized, thereby suppressing the formation of rough edge during rolling, and a grain-oriented electrical steel sheet manufactured by the method.

### (Solution to Problem)

We thus provide the following.
1. A method for manufacturing a grain-oriented electrical steel sheet comprising:
   heating a steel slab to a slab extraction temperature Tr (°C) of 1380 °C or lower by induction heating and holding the steel slab at a temperature T satisfying a range of Tr - 10 °C ≤ T ≤ Tr + 10 °C for at least 5 minutes, the steel slab containing (consisting of)
   C: 0.030 mass% to 0.085 mass%,
   Si: 2.00 mass% to 4.50 mass%,
   Mn: 0.03 mass% to 0.50 mass%,
   S: 0.0005 mass% to 0.0300 mass%,
   sol.Al: 0.005 mass% or more and less than 0.025mass%,
   N: 0.0030 mass% to 0.0090 mass%, and
   at least one element selected from the group consisting of P, As, and Sb: 0.005 mass% to 0.500 mass%, where sol.Al/N satisfies 1.7 or more and 3.0 or less, with the balance being Fe and inevitable impurities,
   wherein, an average current value flowing through the slab is monotonically decreased as heating time passes, and the induction heating is performed with a frequency of 20 Hz to 1000 Hz,
   subjecting the slab to finish rolling to obtain a hot-rolled sheet, wherein a rolling finish temperature at one or both of a leading or trailing end of the hot-rolled sheet is set to 950 °C or lower,
   subjecting the hot-rolled sheet to hot band annealing with soaking at a temperature of 750 °C or higher and 1170 °C or lower for 5 seconds or more and 90 seconds or less to obtain a hot band annealed sheet,
   subsequently, cold rolling the hot band annealed sheet once, or twice or more with intermediate annealing performed therebetween to obtain a cold-rolled sheet with a final sheet thickness, and
   subjecting the cold-rolled sheet to primary recrystallization annealing followed by secondary recrystallization annealing.
2. The method for manufacturing a grain-oriented electrical steel sheet according to 1., wherein the steel slab further contains at least one selected from the group consisting of
   Se: 0.0005 mass% to 0.0200 mass%,
   Ni: 0. 01 mass% to 1.50 mass%,
   Cr: 0.03 mass% to 0.50 mass%,
   Cu: 0.03 mass% to 0.50 mass%,
   Sn: 0.005 mass% to 0.500 mass%,
   Bi: 0.005 mass% to 0.500 mass%,
   Mo: 0.005 mass% to 0.100 mass%,
   B: 0.0002 mass% to 0.0025 mass%,
   Te: 0.0005 mass% to 0.0100 mass%,
   Zr: 0.001 mass% to 0.010 mass%,
   Nb: 0.001 mass% to 0.010 mass%,
   V: 0.001 mass% to 0.010 mass%, and
   Ta: 0.001 mass% to 0.010 mass%.
3. The method for manufacturing a grain-oriented electrical steel sheet according to 1. or 2., wherein the steel slab contains at least two elements selected from the group consisting of Sb, As, and P in an amount of 0.001 mass% to 0.100 mass% each.
4. The method for manufacturing a grain-oriented electrical steel sheet according to any one of 1. to 3., wherein in heating the steel slab, the frequency of induction heating at heating end time is set to be higher than the frequency at heating start time and is not decreased at least during heating.
5. The method for manufacturing a grain-oriented electrical steel sheet according to any one of 1. to 4., wherein in obtaining the hot band annealed sheet, the hot-rolled sheet is further held at a temperature of 700 °C or higher and 900 °C or lower for 5 seconds or more and 180 seconds or less.
6. The method for manufacturing a grain-oriented electrical steel sheet according to any one of 1. to 5., wherein the heating temperature of the steel slab is 1350 °C or lower.
7. The method for manufacturing a grain-oriented electrical steel sheet according to any one of 1. to 6., wherein a coil edge of 5 mm or more is cut and removed prior to the first cold rolling applied to the hot band annealed sheet.
8. A grain-oriented electrical steel sheet comprising,
   a chemical composition containing (consisting of), by mass%, Si: 2.00 mass% to 4.50 mass%, Mn: 0.03 mass% to 0.50 mass%, and at least one element selected from the group consisting of Sb, As, and P: 0.005 mass% to 0.100 mass%, with the balance being Fe and inevitable impurities,
   a magnetic flux density B₈ of 1.94 T or more, and
   a sheet thickness of 0.35 mm or less,
   wherein a number of rough edges (edge cracks) exceeding 3 cm in a sheet transverse direction on an edge portion is 0.020 or less per 10 m in length of the steel sheet.
9. The grain-oriented electrical steel sheet according to 8., further containing at least one selected from the group consisting of:
   Ni: 0.01 mass% to 1.50 mass%,
   Cr: 0.03 mass% to 0.50 mass%,
   Cu: 0.03 mass% to 0.50 mass%,
   Sn: 0.005 mass% to 0.500 mass%,
   Bi: 0.005 mass% to 0.500 mass%,
   Mo: 0.005 mass% to 0.100 mass%,
   B: 0.0002 mass% to 0.0025 mass%,
   Te: 0.0005 mass% to 0.0100 mass%,
   Zr: 0.001 mass% to 0.010 mass%,
   Nb: 0.001 mass% to 0.010 mass%,
   V: 0.001 mass% to 0.010 mass%, and
   Ta: 0.001 mass% to 0.010 mass%.
10. The grain-oriented electrical steel sheet according to 8. or 9., containing at least two elements selected from the group consisting of Sb, As, and P in an amount of 0.001 mass% to 0.100 mass% each.

### (Advantageous Effect)

This disclosure can provide a grain-oriented electrical steel sheet with good manufacturability in which precipitated inhibitors such as AlN and MnS are actively utilized together with group 15 solute elements such as P and Sb and edge crack defects are suppressed by the addition of such group 15 elements, and its manufacturing method.

### BRIEF DESCRIPTION OF THE DRAWINGS

In the accompanying drawings:
FIG. 1 illustrates a relationship between slab heating time and coil current; and
FIG. 2 illustrates a relationship between time and the results of slab temperature measured by a radiation thermometer during slab heating.

### DETAILED DESCRIPTION

Hereinbelow, the experiments are described that led to the development of this disclosure.

First, the experiments below were conducted to verify the effectiveness of changing the heating pattern when heating a slab for grain-oriented electrical steel sheet in an induction heating furnace in suppressing a rough edge.

### <Experiment 1>

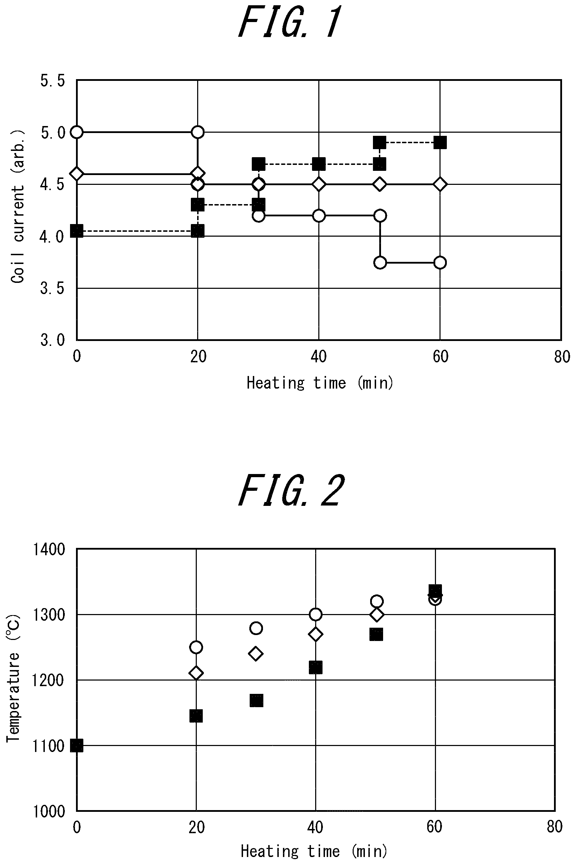

A steel material with the balance being Fe and inevitable impurities (C: 0.050 mass%, Si: 3.40 mass%, Mn: 0.05 mass%, sol.Al: 0.014 mass%, N: 0.007 mass%, S: 0.020 mass%, and Sb: 0.10 mass%) was prepared by steelmaking and made into a steel slab. The steel slab was then heated by induction heating furnace with a target extraction temperature of 1320 °C. FIG. 1 illustrates current values flowing through the coil during heating.

The current flowing in such a coil was set under three conditions: I, where the current value is always constant ( 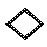 in FIG. 1); II, where the current value is monotonically increased **(■** in FIG. 1); and III, where the current value is monotonically decreased (∘ in FIG. 1). The current value was determined by winding the coil around a conductive part through which a voltage was applied to the coil, measuring the voltage based on changes in the magnetic field around the conductive part, and using circuit parameters to calculate the current value from the voltage value. Such a current value was averaged up to 20 minutes from the start of heating, and every ten minutes thereafter. The current value was considered constant if the change in current value was within 3 %. FIG. 2 illustrates the results of slab temperature measured by a radiation thermometer during heating. The symbols in FIG. 2 mean the same conditions as in FIG. 1. The slab temperature was measured at the center portion of one side of the slab (at a position in the slab in the range of 600 mm to 800 mm from the edge in the width direction and 4000 mm to 6000 mm from the edge in the longitudinal direction). After the slab temperature reached 1320 °C and 10 minutes elapsed, the heating was stopped, and the slab was extracted. During this time, the slab temperature was within the range of 1310 °C to 1330 °C and the extraction temperature was 1320 °C. The slab was subjected to rolling and finish rolling before being coiled into a hot-rolled sheet coil with a sheet thickness of 2.7 mm.

The hot-rolled sheet was then subjected to hot band annealing under the condition of 1000 °C for 60 seconds to make a hot band annealed sheet, and then the hot band annealed sheet was cold rolled until reaching a sheet thickness of 1.8 mm and wound into a coil. Such coil was passed through another coil rewinding line, and an eddy current-type rough edge sensor was used to detect a rough edge at both sheet-widthwise edges along the entire length of the coil. The detection results are listed in Table 1.

As listed in Table 1, the number of detected rough edges increased under the condition where the coil current was monotonically increased during slab heating, compared to the condition where the coil current was kept constant. On the other hand, under the condition where the coil current was monotonically decreased, the number of detected rough edges was found to decrease compared to the condition where the coil current was kept constant.

### [Table 1]

**Table 1**

| Slab heating pattern | Number of detected rough edges (count) |
|---|---|
| constant current | 2 |
| monotonically increased current | 5 |
| monotonically decreased current | 0 |

Subsequently, after intermediate annealing at 1120 °C for 80 seconds, secondary cold rolling was performed to obtain a cold-rolled sheet with a final sheet thickness of 0.22 mm. Thereafter, the cold-rolled sheet was subjected to primary recrystallization annealing by a publicly known method to obtain a primary recrystallization annealed sheet, and then such a primary recrystallization annealed sheet was subjected to secondary recrystallization annealing. Furthermore, for the purpose of flattening the steel sheet and applying an insulating tension coating, the coil after secondary recrystallization annealing was annealed at 830 °C for 10 seconds to obtain a coil of grain-oriented electrical steel sheet. Table 2 lists the results of the investigation of the number of detected rough edges for the coil. The results are indicated as the detection number divided by the coil length.

As with the case after cold rolling, it became clear that under the condition where the coil current was monotonically decreased, the number of detected rough edges decreased compared to the conventional constant current condition.

### [Table 2]

**Table 2**

| Slab heating pattern | Number of detected rough edges (count) |
|---|---|
| constant current | 0.030 |
| monotonically increased current | 0.140 |
| monotonically decreased current | 0.002 |

From the above results, we found that the slab heating process by induction heating of hot rolling strongly affects the frequency of crack occurrence at the coil edge. Furthermore, in addition to actively reviewing the slab heating conditions, we also diligently studied the improvement of the steel microstructure by optimizing each manufacturing process and completed this disclosure.

Based on Experiment 1, the following experiment was further conducted.

### <Experiment 2>

Steel materials consisting of the compositions listed in Table 3 with the balance being Fe and inevitable impurities were prepared by steelmaking and made into steel slabs. Then, each slab was heated using induction heating to the corresponding temperature Tr listed in Table 4 under the condition where the coil current is monotonically decreased, held for 10 minutes in the temperature range of Tr - 10°C to Tr + 10°C, extracted at the temperature Tr, and then hot rolled so that the average finish temperatures of the leading and trailing ends of the resulting hot-rolled sheet were 930 °C to obtain a hot-rolled sheet with a sheet thickness of 2.7 mm. The hot-rolled sheet thus obtained was subjected to hot band annealing at 1000 °C for 60 seconds to make a hot band annealed sheet. The hot band annealed sheet was then subjected to primary cold rolling to achieve an intermediate thickness of 1.8 mm, followed by intermediate annealing at 1120 °C for 80 seconds and secondary cold rolling to obtain a cold-rolled sheet with a final sheet thickness of 0.22 mm.

Thereafter, the cold-rolled sheet was subjected to primary recrystallization annealing by a publicly known method to obtain a primary recrystallization annealed sheet, and then the primary recrystallization annealed sheet was subjected to secondary recrystallization annealing to obtain a steel sheet. Furthermore, for the purpose of flattening the steel sheet and applying an insulating tension coating, the coil after secondary recrystallization annealing was annealed at 830 °C for 10 seconds to obtain a coil of grain-oriented electrical steel sheet. Table 4 also lists the investigation results of the number of detected rough edges for the coil.

### [Table 3]

**Table 3**

| Steel No. | Chemical Composition (mass%) | | | | | | | | |
|---|---|---|---|---|---|---|---|---|---|
| | C | Si | Mn | S | sol.Al | N | Al/N | P | Others |
| A | 0.059 | 3.40 | 0.11 | 0.0100 | 0.015 | 0.0075 | 2.0 | 0.080 | Se: 0.0030 |
| B | 0.055 | 3.40 | 0.11 | 0.0110 | 0.015 | 0.0092 | 1.6 | 0.080 | Se: 0.0030 |
| C | 0.057 | 3.40 | 0.11 | 0.0100 | 0.016 | 0.0052 | 3.1 | 0.080 | Se: 0.0030 |
| D | 0.056 | 3.40 | 0.11 | 0.0110 | 0.015 | 0.0050 | 3.0 | 0.080 | Se: 0.0030 |
| E | 0.056 | 3.40 | 0.11 | 0.0100 | 0.016 | 0.0075 | 1.8 | 0.080 | Se: 0.0030 |

### [Table 4]

**Table 4**

| No. | Steel No. | Slab heating temp. Tr (°C) | Finish temp. (°C) | Number of detected rough edges of primary cold-rolled sheet (count) | Number of detected rough edges of flattening-annealed sheet (count/10m) |
|---|---|---|---|---|---|
| 1 | A | 1240 | 910 | 0 | 0 |
| 2 | A | 1270 | 920 | 0 | 0 |
| 3 | A | 1320 | 930 | 0 | 0 |
| 4 | A | 1390 | 930 | 2 | 0.053 |
| 5 | B | 1320 | 930 | 5 | 0.051 |
| 6 | C | 1320 | 930 | 6 | 0.240 |
| 7 | D | 1320 | 920 | 2 | 0.018 |
| 8 | E | 1320 | 930 | 1 | 0.006 |
| 9 | E | 1380 | 940 | 1 | 0.015 |

The experimental results using steel No. A indicates that the number of detected rough edges tends to increase as the slab extraction temperature was raised to 1390 °C. We have assumed the cause of this as follows. In detail, when the slab extraction temperature is high, the crystal grain size of the slab coarsens, and in turn, the crystal grain size of the hot-rolled sheet also tends to coarsen. Our microstructural observations also indicated that the hot-rolled sheet after high-temperature slab heating had many coarse non-recrystallized crystal grains extending in the rolling direction, and the non-recrystallized microstructure hardly decreased in the subsequent hot band annealing process.

Since the ductility of steel generally increases as the crystal grain size decreases, it is considered that the hot-rolled sheet and hot band annealed sheet with a large grain size after high-temperature slab heating have high brittleness and cracks are formed from the edge during rolling.

With this estimation in mind, we thought that the number of edge cracks could be further reduced by changing the steel composition to increase ductility. The compositions of the produced slabs are as listed in Table 3 above. Here, it is known that an easy way to refine the steel microstructure and increase its ductility is to change the carbon content of the material. However, the carbon content in the material also has a significant effect on the texture of the primary recrystallized sheet and there is a risk of deteriorating the magnetic properties after secondary recrystallization.

Therefore, we examined microstructure refinement by fine-tuning the Al and N contents. Al and N form an inhibitor AlN, and if they precipitate without excess or deficiency, the contents of solute Al or solute N decrease and the Ostwald ripening of AlN is delayed. Therefore, precipitates do not coarsen in the annealing process, coarsening of crystal grain size is strongly suppressed, and then a fine microstructure is maintained. The condition for Al and N to precipitate without excess or deficiency is when the atomic number ratio of Al and N is the same (1:1), and in turn, the value of the Al/N mass ratio is approximately 2.0.

As listed in Table 4, when making comparison at a slab heating temperature of 1320 °C for the rough edge on the flattening-annealed sheet, on Steels A, D and E, the number of rough edges (edge cracks) formed over 3 cm in the sheet transverse direction satisfied 0.020 or less per 10 m length. In detail, it is believed that rough edge can be well suppressed under the condition where the Al/N value is 1.8 or more and 3.0 or less.

Furthermore, we found that when heating is performed with varying the frequency of induction heating and the frequency is not decreased with time, the temperature inside the slab can be made uniform and the magnetic flux density can be good over the entire length of the slab.

Table 5 lists the slab heating conditions. Heating was performed for about 15 minutes within the target extraction temperature (= 1325 °C) ± 10 °C under all conditions, adjusting the coil current value so that the heat patterns were similar even under conditions with different frequencies. The heating condition was changed at 20, 30, 40, and 50 minutes after the start of heating, so the conditions before and after the change are listed together.

Table 6 lists the evaluation results of rough edges and magnetic flux density of grain-oriented electrical steel sheet coils produced using our slab.

### [Table 5]

**Table 5**

| Time (min) | Condition 1 | | Condition 2 | | Condition 3 | | Condition 4 | | Target temp. (°C) |
|---|---|---|---|---|---|---|---|---|---|
| | Frequency (Hz) | Current value (arb.) | Frequency (Hz) | Current value (arb.) | Frequency (Hz) | Current value (arb.) | Frequency (Hz) | Current value (arb.) | |
| 0 | 100 | 5 | 100 | 5 | 220 | 3 | 150 | 1.3 | 1100 |
| 20 | 100 | 5 | 100 | 5 | 220 | 3 | 150 | 1.3 | 1250 |
| 20 | 100 | 4.5 | 100 | 4.2 | 180 | 3.2 | 150 | 1.0 | 1250 |
| 30 | 100 | 4.5 | 100 | 4.2 | 180 | 3.2 | 150 | 1.0 | 1280 |
| 30 | 100 | 4.2 | 120 | 4.2 | 150 | 3.5 | 140 | 1.0 | 1280 |
| 40 | 100 | 4.2 | 120 | 4.2 | 150 | 3.5 | 140 | 1.0 | 1300 |
| 40 | 100 | 4.2 | 150 | 4 | 120 | 3.6 | 135 | 1.0 | 1300 |
| 50 | 100 | 4.2 | 150 | 4 | 120 | 3.6 | 135 | 1.0 | 1320 |
| 50 | 100 | 3.8 | 200 | 3.5 | 80 | 5 | 130 | 1.0 | 1320 |
| 60 | 100 | 3.8 | 200 | 3.5 | 80 | 5 | 130 | 1.0 | 1325 |

### [Table 6]

**Table 6**

| Condition | Number of detected rough edges of flattening-annealed sheet (count/10m) | Magnetic flux density B₈ (T) | | |
|---|---|---|---|---|
| | | Slab leading end | Slab central portion | Slab trailing end |
| 1 | 0.002 | 1.945(0.020) | 1.955(0.018) | 1.950(0.020) |
| 2 | 0 | 1.946(0.015) | 1.955(0.016) | 1.955(0.015) |
| 3 | 0.014 | 1.940(0.037) | 1.945(0.038) | 1.940(0.032) |
| 4 | 0.002 | 1.943(0.022) | 1.948(0.020) | 1.950(0.024) |

The magnetic flux density was measured by SST of 11 test pieces each measuring 300 mm in the rolling direction and 100 mm in the width direction along the coil width direction and 3 rows in the rolling direction, for a total of 33 test pieces. Further, the measurement results were averaged, and Table 6 lists the average values and their standard deviations in parentheses.

It is clear that Heating Pattern Condition 2, in which the frequency was increased, exhibited particularly good characteristics, with no rough edge defect and small average values and variations in magnetic flux density. In contrast, in Pattern Condition 3, in which the frequency was greatly reduced over time, it was no longer possible to obtain a monotonically decreasing current value pattern, and the number of detected rough edges was high. Meanwhile, Condition 4, in which the frequency was decreased but with a smaller decrease, had no noticeable difference compared to Condition 1, in which the frequency was not changed.

The following describes the embodiment of this disclosure. This disclosure is not limited to the following embodiment.

First, the appropriate range of chemical composition of steel slab used for the material of grain-oriented electrical steel sheet of this disclosure and the reasons for the limitation will be explained. In the description below, a numerical range expressed by using "to" means a range including numerical values described before and after "to", as the lower limit value and the upper limit value.

### C: 0.030 mass% to 0.085 mass%

If the C content is less than 0.030 %, the grain boundary strengthening effect by C is lost, causing cracking in the slab and hampering production. It also suppresses non-uniform deformation that is desirable for improving magnetic properties through strain aging during the rolling process. On the other hand, if the C content is more than 0.085 mass%, it is difficult to reduce, by primary recrystallization annealing, the C content to 0.005 mass% or less that causes no magnetic aging. Therefore, the C content is in the range of 0.030 mass% to 0.085 mass%. The C content is preferably 0.040 mass% or more. The C content is preferably 0.080 mass% or less.

### Si: 2.00 mass% to 4.50 mass%

Si is an important element for increasing the specific resistance of the steel sheet and reduce iron loss. These effects cannot be fully realized if the Si content is less than 2.00 mass%. On the other hand, if the Si content exceeds 4.50 mass%, the brittleness of the steel sheet increases, making the rolling process difficult. Therefore, the Si content is in the range of 2.00 mass% to 4.50 mass%. The Si content is preferably 2.50 mass% or more, more preferably 3.00 mass% or more. The Si content is preferably 4.50 mass% or less, more preferably 4.00 mass% or less.

### Mn: 0.03 mass% to 0.50 mass%.

Mn is an element necessary to improve the hot workability of the steel. To obtain the effect, a Mn content of less than 0.03 mass% is not sufficient. On the other hand, if the Mn content exceeds 0.50 mass%, the magnetic flux density of the product sheet decreases. Therefore, the Mn content is in the range of 0.03 mass% to 0.50 mass%. The Mn content is preferably 0.05 mass% or more, more preferably 0.07 mass% or more. The Mn content is preferably 0.20 mass% or less, more preferably 0.15 mass% or less.

### Acid soluble Al (sol.Al): 0.005 mass% or more and less than 0.025 mass%

Al acts as an inhibitor and is an important element for secondary recrystallization of Goss-oriented grains. To obtain the effect, the Al content needs to be 0.005 mass% or more. On the other hand, excessive addition not only excessively inhibits grain growth and prevent secondary recrystallization of Goss-oriented grains, but also forms a dense oxide film on the surface, making it difficult to control the amount of nitridation during nitriding and inhibiting decarburization. Therefore, the sol.Al content is suppressed to less than 0.025 mass%. The sol.Al content is preferably 0.007 mass% or more, more preferably 0.010mass% or more. The sol.Al content is preferably 0.022 mass% or less, more preferably 0.018 mass% or less.

### N: 0.0030 mass% to 0.0090 mass%

N, as with Al, acts as an inhibitor and is an important element for secondary recrystallization of Goss-oriented grains. To obtain the effect, the N content needs to be 0.0030 mass% or more. On the other hand, since N could become the cause of defects such as blisters during slab heating, the N content is suppressed to 0.0090 mass% or less. The more suitable range is defined by the following Al/N.

### sol.Al/N being 1.7 or more and 3.0 or less

N combines with Al to precipitate inhibitor AlN. In that case, Al and N are bonded at an atomic number ratio of 1:1 and a mass ratio of approximately 2:1. In this disclosure, the formation of fine ferrite crystal grains is important to increase ductility, and thus AlN precipitates must be finely dispersed. Such precipitates coarsen during annealing through Ostwald ripening, and the growth rate is considered to increase as the amounts of solute Al and solute N increase. Therefore, as Al and N form AlN without excess or deficiency at a mass ratio of 2:1 and the amounts of solute Al and solute N are smaller, the finer precipitates are retained and in turn, finer ferrite crystal grains can be obtained. Based on the aforementioned experiment, the appropriate range of sol.Al/N is 1.7 to 3.0. The lower limit of Al/N is preferably 1.8. The upper limit of Al/N is preferably 2.5.

### S: 0.0005 mass% to 0.0300 mass%

S combines with Mn to form an inhibitor. A S content less than 0.0005 mass% results in shortage of absolute quantity of the inhibitor and thus insufficient normal grain growth inhibiting capability. On the other hand, if the S content exceeds 0.0300 mass%, desulfurization becomes incomplete in secondary recrystallization annealing and leads to deterioration of iron loss properties. Therefore, the S content is in the range of 0.0005 mass% to 0.0300 mass%. The S content is more preferably 0.0015 mass% or more, further preferably 0.0030 mass% or more.

### At least one element selected from the group consisting of P, As and Sb: 0.005 mass% to 0.500 mass% each

P and Sb dissolve in the steel substrate and act as inhibitors to enhance the selective growth of Goss-oriented grains. They are also elements necessary for improving the texture prior to secondary recrystallization and causing good secondary recrystallization of Goss-oriented grains. To obtain these effects, the content of each of P and Sb is 0.005 mass% or more. On the other hand, excessive addition may impair rollability and hampers production, so each upper limit is 0.500 mass%. The content of each of P and Sb is preferably 0.020 mass% or more. The content of each of P and Sb is preferably 0.150 mass% or less.

As, a homologous element, can be added within the above range because it has an effect of improving magnetic properties. Because it is a toxic element, when As is utilized, it should be used in combination with P and/or Sb. The As content is more preferably 0.001 mass% or more. The As content is more preferably 0.010 mass% or less.

It is preferable to contain two or more elements selected from P, As, and Sb in the above range rather than containing P, As, and Sb alone.

In this disclosure, the balance of the steel slab other than the above components is Fe and inevitable impurities.

In this disclosure, for improving magnetic properties, the steel slab may further contain as appropriate at least one selected from the group consisting of Se: 0.0005 mass% to 0.0200 mass%, Ni: 0.01 mass% to 1.50 mass%, Cr: 0.03 mass% to 0.50 mass%, Cu: 0.03 mass% to 0.50 mass%, Sn: 0.005 mass% to 0.500 mass%, Bi: 0.005 mass% to 0.500 mass%, Mo: 0.005 mass% to 0.100 mass%, B: 0.0002 mass% to 0.0025 mass%, Te: 0.0005 mass% to 0.0100 mass%, Zr: 0.001 mass% to 0.010 mass%, Nb: 0.001 mass% to 0.010 mass%, V: 0.001 mass% to 0.010 mass%, and Ta: 0.001 mass% to 0.010 mass%.

### [Manufacturing method]

The following describes a method for manufacturing a grain-oriented electrical steel sheet according to the disclosure.

### <Heating process>

A steel material having the aforementioned chemical composition is prepared by steelmaking using a conventional refining process and then subjected to ingot casting and blooming or continuous casting to obtain a steel slab. Alternatively, a thin steel slab with a thickness of 100 mm or less may be produced by direct casting. The steel slab is heated to and held at an extraction temperature Tr of 1380 °C or lower and then hot rolled. If the retention temperature is equal to or lower than the γ-phase precipitation temperature, the crystalline phase becomes biphasic, and solute elements are concentrated in the γ- and α-phases, leaving a non-uniform steel microstructure until the subsequent processes, which may cause magnetic defects. Therefore, the more preferred holding temperature is in the temperature range where the y phase does not precipitate. Furthermore, slab heating at a temperature exceeding 1380 °C results in excessively large ferrite grain size before hot rolling, forming a coarse non-recrystallized microstructure in the hot-rolled sheet, which impairs the steel's ductility, and a rough edge tends to be formed during rolling. The heating temperature of the slab is preferably 1350 °C or lower. On the other hand, no lower limit is placed on Tr as long as it is higher than the γ-phase precipitation temperature, but about 1200 °C is preferred. The slab temperature is based on the surface temperature of the steel slab.

It is difficult to maintain the slab temperature at exactly the target soaking temperature during slab heating in actual operations. Therefore, in this disclosure, based on the actual temperature variation in actual operations, it is necessary to heat the slab at a temperature T that satisfies the relationship Tr - 10 °C ≤ T ≤ Tr +10 °C to the slab extraction temperature: Tr (°C) of 1380 °C or lower for 5 minutes or more.

In detail, the above formula for temperature T means that ±10 °C is provided as the allowable range of temperature variation.

If the heating time at this temperature T is less than 5 minutes, temperature unevenness in the slab occurring during heating due to induction heating is not sufficiently corrected, and depending on the slab position, the temperature may be low, resulting in insufficient dissolution of inhibitors and deteriorated magnetic properties. More preferably, the heating time is set to 10 minutes or more. No upper limit is placed on the heating time, but the heating time is preferably set to 60 minutes or less, since excessive prolongation hinders productivity.

The slab heating in this disclosure is performed by induction heating method. The power supply frequency for such induction heating is set to 20 Hz or more and 1000 Hz or less. In induction heating, the heat generation is stronger on the surface layer side of the slab due to the skin effect, which is more pronounced at higher frequencies. If only the surface layer is heated intensively, a temperature difference is created between the surface layer and the inside of the slab, resulting in a large deviation from the temperature of slab surface layer measured by a radiation thermometer for managing the slab temperature. Therefore, for uniform heating of the slab, a lower frequency is preferable, and the frequency is set to 1000 Hz or less. It is preferably set to 300 Hz or less. It is more preferably set to 200 Hz or less. On the other hand, the frequency is set to 20 Hz or more for efficient induction heating. It is preferably 50 Hz or more.

If the induction heating conditions satisfy this disclosure, gas atmosphere heating can be further added to part of the slab heating.

The current flowing in the coil during induction heating is controlled so that its average value decreases monotonically. Monotonically decreasing here means that fluctuations due to variations do not increase by more than ±5 % relative to the current value at the start of heating, and that the current value just before the end of heating decreases by more than 5 % relative to the current value at the start of heating. Although there may be no change in the current value until midway through heating, the current value just before the end of heating is preferably at least about 10 % lower than that at the start of heating. Although the measured coil currents are not constant due to measurement variations and AC currents, the average value is the average value over a 5-minute period.

Furthermore, it is preferable to monotonically increase the frequency of induction heating in the heating process of the steel slab. Monotonically increasing the frequency means that the frequency is increased gradually so that the frequency at the end of heating is higher than that at the start of heating, and the frequency is should not be decreased during heating.

Although the mechanism by which the properties are improved by gradually increasing the frequency is still unclear, the following reasons are considered, for example.

In detail, the energy released from the blackbody is proportional to the fourth power of temperature, which is also true when the slab is heated, and the more energy is lost from the slab surface as the temperature is higher. Therefore, in the latter half of slab heating, heat releasing from the slab surface also tends to be larger because of the higher slab temperature. Therefore, by applying induction heating at a higher frequency in the latter half of heating, it is possible to generate heat preferentially on the slab surface, which has a large heat releasing, resulting in a more uniform temperature distribution throughout the slab.

### <Hot rolling>

The slab heated by the above procedures is subjected to rough rolling and finish rolling to obtain a hot-rolled sheet and coiled. The thickness of the hot-rolled sheet is preferably 1.5 mm or more. The thickness of the hot-rolled sheet is preferably 4.0 mm or less. Here, the rolling finish temperature is set to 950 °C or lower at one or both of the leading or trailing end. If the rolling finish temperature is high, the recrystallized microstructure coarsens during rolling, leading to ductility deterioration of the steel in subsequent processes and impairing manufacturability. It is more preferably 920 °C or lower. The lower limit of the rolling finish temperature is not limited as long as the slab can be coiled as a hot-rolled sheet, but is around 850 °C.

In this disclosure, in order to prevent coarsening of inhibitors, the hot rolling process is preferably completed by cooling the hot-rolled sheet for 1 second or more at a cooling rate of 100 °C/second or more within 2 seconds after the completion of finish rolling and coiling the hot-rolled sheet after cooling at a coiling temperature of 600 °C or lower. Further preferably, cooling is applied to the hot-rolled sheet within 1 second after the completion of finish rolling.

Subsequently, skin pass rolling may be performed after the completion of finish rolling and before hot band annealing. Skin pass rolling can correct the shape of steel sheet.

### <Hot band annealing>

Next, the hot-rolled sheet after finish rolling or hot-rolled sheet obtained by the skin pass rolling is subjected to hot band annealing. The soaking temperature of hot band annealing is set to 750 °C or higher and 1170 °C or lower. The soaking time is set to 5 seconds or more and 90 seconds or less. This is because if the soaking temperature is lower than 750 °C, the diffusion amount of inhibitor-forming elements such as Al is insufficient and inhibitors do not sufficiently precipitate and if the soaking temperature is low, the strain remaining in the grains extending in the rolling direction of the hot-rolled sheet cannot be removed, making it difficult to obtain a primary recrystallized texture of uniformly-sized grains and inhibiting the growth of secondary recrystallized grains. On the other hand, when the soaking temperature is higher than 1170 °C, the inhibitor is solubilized and the amount of inhibitor that cannot precipitate increases.

If the soaking time is less than 5 seconds, the inhibitor-forming elements cannot diffuse sufficiently and the inhibitor does not sufficiently precipitate, and it is difficult to obtain a primary recrystallized texture of uniformly-sized grains. On the other hand, if the soaking time exceeds 90 seconds, the inhibitor precipitates coarsely and cannot fully exhibit its grain growth inhibiting effect as an inhibitor, and the primary recrystallized texture becomes excessively coarse, impairing manufacturability.

The soaking temperature of hot band annealing is preferably 850 °C or higher. On the other hand, the soaking temperature of hot band annealing is preferably 1150 °C or lower.

The hot band annealing process preferably includes a process of additionally holding the hot-rolled sheet at a temperature of 700 °C or higher and 900 °C or lower for 5 seconds or more and 180 seconds or less. In the hot-rolled sheet annealing process, AlN that does not fully precipitate in the hot rolling process precipitates, and it is known that AlN efficiently precipitates in the above temperature range. Since the aim of this disclosure is to maintain high ductility by actively precipitating the inhibitor and inhibiting crystal grain growth properties, the additional annealing is preferred because it allows further precipitation of AlN. The temperature does not necessarily need to be maintained in the above range. By adjusting the heating rate and cooling rate, the hot-rolled sheet may be held in the temperature range of 700 °C to 900 °C for 5 seconds or more and 180 seconds or less. As more favorable conditions, such temperature is 750 °C or higher. The time is more preferably 10 seconds or more. The time is more preferably 180 seconds or less.

### <Cold rolling>

After hot band annealing, the hot band annealed sheet is cold-rolled once, or twice or more with intermediate annealing performed therebetween to obtain a cold-rolled sheet having a final sheet thickness. The soaking temperature of the intermediate annealing is preferably 900 °C or higher. The soaking temperature of the intermediate annealing is preferably 1200 °C or lower. If the soaking temperature is 900 °C or higher, it effectively prevents the recrystallized grains from becoming too fine after intermediate annealing and also effectively prevents the reduction of Goss nuclei in the primary recrystallized texture, thereby further improving the magnetic properties of the grain-oriented electrical steel sheet. On the other hand, if the soaking temperature is 1200 °C or lower, the crystal grains do not become too coarse, and a more desirable primary recrystallized texture of uniformly-sized grains can be obtained. The soaking temperature is more preferably 1150 °C or lower.

The cold rolling may be done by either tandem rolling (unidirectional rolling) or reverse rolling and may also utilize publicly known warm rolling techniques or inter-pass aging techniques.

In addition, sheet cracking starting from the rough edge occurred when strong deformation such as cold rolling was applied. Therefore, cutting and removing the rough edge at the coil edge prior to the first cold rolling can significantly reduce the frequency of sheet cracking. The cutting width is preferably 5 mm or more. On the other hand, no upper limit is placed on the cutting width, but the cutting width is about 30 mm or less from the viewpoint of productivity, etc.

Such cutting and removal may be performed continuously before the first cold rolling, i.e., in the cold rolling process or after the hot band annealed sheet is obtained in the previous process line, or may be performed as an additional process by transferring the coil to a dedicated line for processing. For the cutting method, publicly known techniques such as laser cutting, water jet cutting, etc., as well as mechanical trimming machines, can be applied.

The final sheet thickness of cold-rolled sheet is preferably 0.15 mm or more in terms of rolling load reduction. On the other hand, the upper limit of the final sheet thickness is 0.35 mm.

### <Primary recrystallization annealing>

The cold-rolled sheet having a final sheet thickness is then subjected to primary recrystallization annealing. The annealing temperature for this primary recrystallization annealing is, if it also serves as decarburization annealing, preferably 800 °C or higher from the viewpoint of allowing the decarburization reaction to proceed rapidly. The annealing temperature for this primary recrystallization annealing is, if it also serves as decarburization annealing, preferably 900 °C or lower from the viewpoint of allowing the decarburization reaction to proceed rapidly. The atmosphere is preferably a wet atmosphere. The primary recrystallization annealing may be performed separately from decarburization annealing.

Thus, in the grain-oriented electrical steel sheet according to this disclosure, the C content can be reduced to the level of impurities and the adverse effects of C due to magnetic aging can be eliminated.

### <Secondary recrystallization annealing>

The primary recrystallization annealed sheet after such primary recrystallization annealing is then subjected to secondary recrystallization annealing to obtain a grain-oriented electrical steel sheet.

When iron loss properties and transformer noise reduction are particularly important, the primary recrystallization annealed sheet is preferably applied with an annealing separator mainly composed of MgO on its surface (on one or both sides), dried, and then subjected to secondary recrystallization annealing. Here, "mainly composed of MgO" means that the MgO content is 80 mass% with respect to the total amount of the annealing separator. By applying the annealing separator to the surface of the primary recrystallization annealed sheet and then performing secondary recrystallization annealing, a secondary recrystallized microstructure in which crystal grains are highly accumulated in the Goss orientation can be developed and a forsterite film can be formed on the steel sheet surface.

On the other hand, if punching workability is important and forsterite film formation is not desired, it is preferable to either not apply an annealing separator or to perform secondary recrystallization annealing using an annealing separator mainly composed of silica or alumina, etc. Here, "mainly composed of silica or alumina, etc." means that the silica or alumina, etc. content is 80 mass% with respect to the total amount of the annealing separator. If the forsterite film is not formed, it is effective to apply the annealing separator by electrostatic coating, which does not bring in moisture. Further, publicly known heat-resistant inorganic material sheets may be used in place of the annealing separator. The heat-resistant inorganic material sheets include, for example, silica, alumina, and mica.

For the conditions for secondary recrystallization annealing, in the case of forming the forsterite film, it is preferable to maintain the temperature in the vicinity of 800 °C to 1050 °C for at least 20 hours to develop and complete secondary recrystallization, and then further increase the temperature to 1100 °C or higher. If iron loss properties are important and purification treatment is applied, the temperature is preferably further increased to about 1200 °C. On the other hand, if the forsterite film is not formed, the annealing process can be completed with a temperature increase to 800 °C to 1050 °C, since it is sufficient that secondary recrystallization is completed.

In the grain-oriented electrical steel sheet according to this disclosure, N, Al, S, and Se are all decreased compared to the composition of the slab because they are diffused and released into the annealing separator and the annealing atmosphere during secondary recrystallization annealing. Therefore, after secondary recrystallization annealing, N, Al, S, and Se are treated as inevitable impurities in addition to the inevitable impurities in the slab.

An unreacted annealing separator may be removed from the steel sheet surface by performing water washing, brushing, pickling, etc. on the secondary recrystallization annealed sheet (grain-oriented electrical steel sheet) after secondary recrystallization annealing. The secondary recrystallization annealed sheet may be further subjected to flattening annealing. The secondary recrystallization annealing is usually performed on the coil-shaped steel sheet, which results in coil set. This coil set may degrade iron loss properties. Shape adjustment by flattening annealing can further reduce iron loss.

Furthermore, when the steel sheets are stacked, it is effective to apply insulating coatings to the steel sheet surfaces during or before or after the flattening annealing process. In particular, to reduce iron loss, it is preferable to form a tension-applying coating that imparts tension to the steel sheet as the insulating coating. To form the tension-applying coating, it is possible to adopt a method of applying the tension-applying coating through a binder as well as a method that allows inorganic materials to be deposited on the surface layer of the steel sheet through a physical vapor deposition or chemical vapor deposition method. These methods enable the formation of insulating coating with excellent coating adhesion and significant iron loss reduction effect.

To further reduce iron loss, it is preferable to apply magnetic domain refining treatment to the grain-oriented electrical steel sheet. For the method for magnetic domain refining treatment, can be used publicly known methods for magnetic domain refining treatment such as methods of forming grooves on the surface (front or back side) of the grain-oriented electrical steel sheet (steel sheet after final annealing), and introducing thermal strains or impact strains in linear or dot shapes by electron beam irradiation, laser irradiation, plasma irradiation, etc., etching the surface of the cold-rolled sheet with a final sheet thickness or a steel sheet in an intermediate process to form grooves.

For other than the manufacturing conditions described above, the conventional method can be followed.

The method provided by this disclosure can suppress the formation of rough edge at the coil-widthwise edge of cold-rolled sheet and flattening-annealed sheet, even with the chemical composition in which group 15 elements such as P and Sb are actively used. As a result, compared to the conventional techniques, sheet cracking starting from the rough edge is reduced during sheet passing, and good manufacturability can be obtained. Specifically, the number of rough edges (edge cracks) exceeding 3 cm formed in the sheet transverse direction per 10 m of flattening-annealed sheet (steel sheet) can be 0.020 or less.

According to this disclosure, it is possible to develop excellent magnetic properties compared to the conventional techniques. In detail, according to the manufacturing method according to this disclosure, a grain-oriented electrical steel sheet with a magnetic flux density B₈ of 1.94T or more and a sheet thickness of 0.35 mm or less can be produced. The magnetic flux density B₈ was measured by cutting out Epstein test pieces from the grain-oriented electrical steel sheet and according to the Epstein's method described in JIS C2550.

The grain-oriented electrical steel sheet obtained by this disclosure exhibits high magnetic flux density. If the grain-oriented electrical steel sheet produced by this technique are used in transformers, not only can energy use efficiency be improved, but also transformer noise can be reduced. The method for manufacturing a grain-oriented electrical steel sheet not only makes it possible to use power equipment such as transformers with high efficiency, but also contributes to reducing noise during operation caused by magnetic distortion.

### EXAMPLES

Steel materials consisting of the compositions listed in Table 7 with the balance being Fe and inevitable impurities were prepared by steelmaking and made into steel slabs by continuous casting. The steel slabs were heated under the conditions listed in Table 8, subjected to rough rolling to make rough-rolled sheets. Each rough-rolled sheet was subjected to finish rolling to make a hot-rolled sheet, the hot-rolled sheet was cooled, and the hot-rolled sheet after cooling was coiled. Here, such cooling was performed within 2 seconds after the end of finish rolling at a cooling rate of 100 °C/second or more for 1 seconds to 5 seconds and coiling was performed in the temperature range of 450 °C to 600 °C. The hot-rolled sheet was then subjected to hot band annealing to make a hot band annealed sheet. Induction heating was used for slab heating, with a constant or monotonically increasing frequency in the range of 50 Hz to 300 Hz. When the coil edge was cut and removed, the cutting width was 5 mm.

### [Table 7]

**Table 7**

| Steel No. | Chemical Composition (mass%) | | | | | | | | | | |
|---|---|---|---|---|---|---|---|---|---|---|---|
| | C | Si | Mn | S | sol.Al | N | Al/N | P | As | Sb | Others |
| F | 0.065 | 3.41 | 0.05 | 0.0050 | 0.015 | 0.0070 | 2.1 | 0.120 | - | - | Se:0.0120 |
| G | 0.058 | 3.37 | 0.05 | 0.0050 | 0.018 | 0.0075 | 2.4 | - | - | 0.120 | Se:0.0140 |
| H | 0.050 | 3.42 | 0.05 | 0.0220 | 0.024 | 0.0082 | 2.9 | - | 0.005 | - | - |
| I | 0.045 | 3.35 | 0.05 | 0.0240 | 0.013 | 0.0067 | 1.9 | 0.050 | 0.002 | 0.050 | - |
| J | 0.035 | 3.39 | 0.05 | 0.0080 | 0.014 | 0.0064 | 2.2 | 0.080 | - | 0.050 | Se:0.0060 |
| K | 0.040 | 3.41 | 0.05 | 0.0030 | 0.018 | 0.0068 | 2.6 | - | - | 0.100 | Se:0.0100, Ni:0.10, Cr:0.05 |
| L | 0.046 | 3.36 | 0.05 | 0.0030 | 0.017 | 0.0067 | 2.5 | 0.050 | 0.002 | 0.030 | Se:0.0100, Cu:0.15 |
| M | 0.058 | 3.38 | 0.06 | 0.0050 | 0.015 | 0.0062 | 2.4 | 0.020 | 0.001 | 0.070 | Se:0.0100, Sn:0.180, B:0.0002 |
| N | 0.067 | 3.45 | 0.05 | 0.0050 | 0.017 | 0.0069 | 2.5 | 0.020 | - | 0.180 | Se:0.0100, V:0.002, Mo:0.007 |
| O | 0.067 | 3.43 | 0.04 | 0.0050 | 0.006 | 0.0035 | 1.7 | 0.100 | - | - | Se:0.0100, Bi:0.005 |

### [Table 8]

**Table 8**

| No. | Steel No. | Hot rolling | | | | | | | Hot-rolled sheet annealing | | | Cold rolling (and intermediate rolling in part) | | | flattening annealing | | Remarks |
|---|---|---|---|---|---|---|---|---|---|---|---|---|---|---|---|---|---|
| | | Slab extraction temp. (°C) | Heating time (mm) | Current control pattern | Frequency control pattern | Finish temp. * (°C) | Time from finish rolling to cooling (second) | Final thickness (mm) | Soaking temp. (°C) | Soaking time (second) | Additional high-temp. holding | Cut and removal of edge before | Intermediate thickness (mm) rolling | Intermediate annealing temp. (°C) | Number of rough edges in final rolled coil (count/10m) | Magnetic flux density B₈ (T) | |
| 1 | F | 1350 | 15 | monotonically decreased | constant | 920 | 0.5 | 2.7 | 950 | 20 | absent | absent | 1.9 | 1100 | 0.010 | 1.942 | Example |
| 2 | G | 1350 | 12 | monotonically decreased | constant | 920 | 0.5 | 2.7 | 950 | 20 | absent | absent | 1.9 | 1080 | 0.012 | 1.946 | Example |
| 3 | H | 1350 | 15 | monotonically decreased | constant | 920 | 0.5 | 2.7 | 950 | 20 | absent | absent | 1.9 | 1080 | 0.017 | 1.942 | Example |
| 4 | I | 1350 | 9 | monotonically decreased | constant | 920 | 0.5 | 2.7 | 950 | 20 | absent | absent | 1.9 | 1100 | 0.011 | 1.955 | Example |
| 5 | J | 1350 | 15 | monotonically decreased | constant | 920 | 0.5 | 2.7 | 950 | 20 | absent | absent | 1.9 | 1100 | 0.015 | 1.953 | Example |
| 6 | K | 1350 | 15 | monotonically decreased | constant | 920 | 0.5 | 2.7 | 950 | 20 | absent | absent | 1.9 | 1100 | 0.014 | 1.943 | Example |
| 7 | L | 1350 | 15 | monotonically decreased | constant | 920 | 0.5 | 2.7 | 950 | 20 | absent | absent | 1.9 | 1070 | 0.015 | 1.952 | Example |
| 8 | M | 1350 | 20 | monotonically decreased | constant | 920 | 0.5 | 2.7 | 950 | 20 | absent | absent | 1.9 | 1100 | 0.017 | 1.957 | Example |
| 9 | N | 1350 | 12 | monotonically decreased | constant | 920 | 0.5 | 2.7 | 950 | 20 | absent | absent | 1.9 | 1080 | 0.012 | 1.951 | Example |
| 10 | O | 1350 | 15 | monotonically decreased | constant | 920 | 0.5 | 2.7 | 950 | 20 | absent | absent | 1.9 | 1100 | 0.014 | 1.944 | Example |
| 11 | L | 1260 | 12 | monotonically decreased | monotonically increased | 890 | 0.5 | 2.7 | 950 | 20 | absent | absent | 1.9 | 1120 | 0.001 | 1.953 | Example |
| 12 | L | 1300 | 7 | monotonically decreased | monotonically increased | 900 | 0.5 | 2.7 | 950 | 20 | absent | absent | 1.9 | 1120 | 0.002 | 1.950 | Example |
| 13 | L | 1320 | 12 | monotonically decreased | monotonically increased | 920 | 0.5 | 2.7 | 950 | 20 | absent | absent | 1.9 | 1120 | 0.004 | 1.953 | Example |
| 14 | L | 1350 | 12 | monotonically decreased | monotonically increased | 920 | 0.5 | 2.7 | 950 | 20 | absent | absent | 1.9 | 1120 | 0.005 | 1.955 | Example |
| 15 | L | 1380 | 15 | monotonically decreased | monotonically increased | 930 | 0.5 | 2.7 | 950 | 20 | absent | absent | 1.9 | 1120 | 0.006 | 1.943 | Example |
| 16 | L | 1400 | 15 | monotonically decreased | monotonically increased | 940 | 0.5 | 2.7 | 950 | 20 | absent | absent | 1.9 | 1120 | 0.036 | 1.935 | Comparative Example |
| 17 | F | 1380 | 11 | monotonically decreased | monotonically increased | 955 | 0.5 | 2.7 | 950 | 20 | absent | absent | 1.9 | 1070 | 0.021 | 1.942 | Comparative Example |
| 18 | F | 1380 | 10 | monotonically decreased | monotonically increased | 945 | 0.5 | 2.7 | 950 | 20 | absent | absent | 1.9 | 1070 | 0004 | 1.945 | Example |
| 19 | F | 1380 | 18 | monotonically decreased | monotonically increased | 900 | 0.5 | 27 | 950 | 20 | absent | absent | 1.9 | 1070 | 0.007 | 1.947 | Example |

| No. | Steel No. | Hot rolling | | | | | | | Hot-rolled Cold rolling sheet annealing (and intermediate rolling in part) | | | | | | flattening annealing | | Remarks |
|---|---|---|---|---|---|---|---|---|---|---|---|---|---|---|---|---|---|
| | | Slab extraction temp. (°C) | Heating time (min) | Current control pattern | Frequency control pattern | Finish temp. * (°C) | Time from finish rolling to cooling (second) | Final thickness (mm) | Soaking temp. (°C) | Soaking time (second) | Additional high-temp. holding | Cut and removal of edge before rolling | Intermediate thickness (mm) | Intermediate annealing temp. (°C) | Number of rough edges in final rolled coil (count/10m) | Magnetic flux density B₈ (T) | |
| 20 | K | 1320 | 9 | monotonically decreased | monotonically increased | 920 | 0.5 | 2.7 | 700 | 90 | absent | absent | 1.9 | 1100 | 0.010 | 1.928 | Comparative Example |
| 21 | K | 1320 | 13 | monotonically decreased | monotonically increased | 920 | 0.5 | 2.7 | 750 | 60 | absent | absent | 1.9 | 1100 | 0.011 | 1.942 | Example |
| 22 | K | 1320 | 15 | monotonically decreased | monotonically increased | 920 | 0.5 | 2.7 | 950 | 20 | absent | absent | 1.9 | 1100 | 0.011 | 1.951 | Example |
| 23 | K | 1320 | 12 | monotonically decreased | monotonically increased | 920 | 0.5 | 2.7 | 1050 | 10 | absent | absent | 1.9 | 1100 | 0.010 | 1.946 | Example |
| 24 | K | 1320 | 11 | monotonically decreased | monotonically increased | 920 | 0.5 | 22 | 1150 | 5 | absent | absent | - | - | 0.017 | 1.941 | Example |
| 25 | K | 1320 | 9 | monotonically decreased | monotonically increased | 920 | 0.5 | 2.2 | 1180 | 5 | absent | absent | - | - | 0.048 | 1.918 | Comparative Example |
| 26 | G | 1350 | 5 | monotonically decreased | constant | 920 | 0.5 | 2.7 | 950 | 20 | *1 | absent | 1.9 | 1080 | 0.006 | 1.955 | Example |
| 27 | G | 1350 | 8 | monotonically decreased | constant | 920 | 0.5 | 2.7 | 950 | 20 | *2 | absent | 1.9 | 1080 | 0.003 | 1.957 | Example |
| 28 | I | 1350 | 9 | monotonically decreased | constant | 920 | 0.5 | 2.7 | 950 | 20 | absent | present | 1.9 | 1100 | 0.000 | 1.950 | Example |
| 29 | J | 1310 | 20 | monotonically decreased | constant | 900 | 0.5 | 2.5 | 1000 | 20 | absent | present | 2.0 | 1100 | 0.007 | 1.951 | Example |
| 30 | J | 1330 | 12 | monotonically decreased | monotonically increased | 915 | 0.5 | 27 | 1050 | 20 | *3 | present | 1.9 | 1100 | 0.003 | 1.955 | Example |
| 31 | J | 1330 | 12 | monotonically decreased | constant | 915 | 0.5 | 2.6 | 950 | 20 | *3 | present | 1.8 | 1080 | 0.006 | 1.956 | Example |
| 32 | J | 1360 | 11 | monotonically decreased | monotonically increased | 930 | 0.5 | 2.7 | 1000 | 20 | absent | present | 1.8 | 1080 | 0.005 | 1.952 | Example |
| 33 | J | 1360 | 9 | monotonically decreased | monotonically increased | 920 | 0.5 | 2.5 | 1050 | 20 | *4 | present | 1.8 | 1100 | 0.003 | 1.958 | Example |
| 34 | J | 1350 | 15 | monotonically decreased | constant | 920 | 3 | 27 | 950 | 20 | absent | absent | 1.9 | 1100 | 0.015 | 1.940 | Example |

| | | | | | | | | | | | | | | | | | |
|---|---|---|---|---|---|---|---|---|---|---|---|---|---|---|---|---|---|
| * lower of values on leading and trailing ends *1 holding at 800°C for 50 seconds *2 cooling in 60 seconds from 900°C to 800 °C *3: cooling in 30 seconds from 900 °C to 800 °C *4: holding at 800 °C and for 120 seconds | | | | | | | | | | | | | | | | | |

After hot band annealing, pickling for scale removal was performed, and then cold rolling was performed twice with intermediate annealing performed therebetween, or once to obtain a sheet thickness of 0.22 mm. Next, primary recrystallization annealing was performed at 860 °C for 120 seconds in a wet atmosphere of 60 vol% H₂-40 vol% N₂ and dew point of 52 °C to 58 °C to obtain a primary recrystallized sheet. Then, the primary recrystallized sheet was applied with an annealing separator mainly composed of MgO on its surface, and then subjected to secondary recrystallization annealing at 1200 °C for 50 hours. Subsequently, phosphate-based insulating tension coating was applied and baked and flattening annealing was performed for the purpose of flattening the steel strip to obtain a product sheet. Epstein test pieces were cut from the resulting product sheet, and the magnetic flux density B₈ was measured by the method described above.

From Table 8, it can be seen that by applying this disclosure, a grain-oriented electrical steel sheet with excellent manufacturability in which the formation of rough edge is suppressed during rolling can be obtained.

## Claims

1. A method for manufacturing a grain-oriented electrical steel sheet comprising:
heating a steel slab to a slab extraction temperature Tr (°C) of 1380 °C or lower by induction heating and holding the steel slab at a temperature T satisfying a range of Tr - 10 °C ≤ T ≤ Tr + 10 °C for at least 5 minutes, the steel slab containing
C: 0.030 mass% to 0.085 mass%,
Si: 2.00 mass% to 4.50 mass%,
Mn: 0.03 mass% to 0.50 mass%,
S: 0.0005 mass% to 0.0300 mass%,
sol.Al: 0.005 mass% or more and less than 0.025 mass%,
N: 0.0030 mass% to 0.0090 mass%, and
at least one element selected from the group consisting of P, As, and Sb: 0.005 mass% to 0.500 mass%, where sol.Al/N satisfies 1.7 or more and 3.0 or less, with the balance being Fe and inevitable impurities,
wherein, an average current value flowing through the slab is monotonically decreased as heating time passes, and the induction heating is performed with a frequency of 20 Hz to 1000 Hz,
subjecting the slab to finish rolling to obtain a hot-rolled sheet, wherein a rolling finish temperature at one or both of a leading or trailing end of the hot-rolled sheet is set to 950 °C or lower,
subjecting the hot-rolled sheet to hot band annealing with soaking at a temperature of 750 °C or higher and 1170 °C or lower for 5 seconds or more and 90 seconds or less to obtain a hot band annealed sheet,
subsequently, cold rolling the hot band annealed sheet once, or twice or more with intermediate annealing performed therebetween to obtain a cold-rolled sheet with a final sheet thickness, and
subjecting the cold-rolled sheet to primary recrystallization annealing followed by secondary recrystallization annealing.

2. The method for manufacturing a grain-oriented electrical steel sheet according to claim 1, wherein the steel slab further contains at least one selected from the group consisting of
Se: 0.0005 mass% to 0.0200 mass%,
Ni: 0.01 mass% to 1.50 mass%,
Cr: 0.03 mass% to 0.50 mass%,
Cu: 0.03 mass% to 0.50 mass%,
Sn: 0.005 mass% to 0.500 mass%,
Bi: 0.005 mass% to 0.500 mass%,
Mo: 0.005 mass% to 0.100 mass%,
B: 0.0002 mass% to 0.0025 mass%,
Te: 0.0005 mass% to 0.0100 mass%,
Zr: 0.001 mass% to 0.010 mass%,
Nb: 0.001 mass% to 0.010 mass%,
V: 0.001 mass% to 0.010 mass%, and
Ta: 0.001 mass% to 0.010 mass%.

3. The method for manufacturing a grain-oriented electrical steel sheet according to claim 1 or 2, wherein the steel slab contains at least two elements selected from the group consisting of Sb, As, and P in an amount of 0.001 mass% to 0.100 mass% each.

4. The method for manufacturing a grain-oriented electrical steel sheet according to any one of claims 1 to 3, wherein in heating the steel slab, the frequency of induction heating at heating end time is set to be higher than the frequency at heating start time and is not decreased during heating.

5. The method for manufacturing a grain-oriented electrical steel sheet according to any one of claims 1 to 4, wherein in obtaining the hot band annealed sheet, the hot-rolled sheet is further held at a temperature of 700 °C or higher and 900 °C or lower for 5 seconds or more and 180 seconds or less.

6. The method for manufacturing a grain-oriented electrical steel sheet according to any one of claims 1 to 5, wherein the heating temperature of the steel slab is 1350 °C or lower.

7. The method for manufacturing a grain-oriented electrical steel sheet according to any one of claims 1 to 6, wherein a coil edge of 5 mm or more is cut and removed prior to the first cold rolling applied to the hot band annealed sheet.

8. A grain-oriented electrical steel sheet comprising,
a chemical composition containing, by mass%, Si: 2.00 mass% to 4.50 mass%, Mn: 0.03 mass% to 0.50 mass%, and at least one element selected from the group consisting of Sb, As, and P: 0.005 mass% to 0.100 mass%, with the balance being Fe and inevitable impurities,
a magnetic flux density B₈ of 1.94 T or more, and
a sheet thickness of 0.35 mm or less,
wherein a number of rough edges (edge cracks) exceeding 3 cm in a sheet transverse direction on an edge portion is 0.020 or less per 10 m in length of the steel sheet.

9. The grain-oriented electrical steel sheet according to claim 8, wherein the chemical composition further contains at least one selected from the group consisting of:
Ni: 0.01 mass% to 1.50 mass%,
Cr: 0.03 mass% to 0.50 mass%,
Cu: 0.03 mass% to 0.50 mass%,
Sn: 0.005 mass% to 0.500 mass%,
Bi: 0.005 mass% to 0.500 mass%,
Mo: 0.005 mass% to 0.100 mass%,
B: 0.0002 mass% to 0.0025 mass%,
Te: 0.0005 mass% to 0.0100 mass%,
Zr: 0.001 mass% to 0.010 mass%,
Nb: 0.001 mass% to 0.010 mass%,
V: 0.001 mass% to 0.010 mass%, and
Ta: 0.001 mass% to 0.010 mass%.

10. The grain-oriented electrical steel sheet according to claim 8 or 9, wherein the chemical composition contains at least two elements selected from the group consisting of Sb, As, and P in an amount of 0.001 mass% to 0.100 mass% each.
